# EUROPÄISCHE PATENTANMELDUNG

(11) **EP 3 091 760 A1**
(43) Veröffentlichungstag der Anmeldung: **09.11.2016**
(21) Anmeldenummer: 16168555.7
(22) Anmeldetag: 06.05.2016
(51) Int. Cl.: H04W 4/02, H04L 29/08, G06Q 30/06, H04W 4/00, H04W 88/02, H04W 88/08, B62B 5/00, B62B 3/00, G09F 3/20, G06Q 30/02, G01S 11/06, H04W 8/00, G09F 7/00

(54) **EINKAUFSSYSTEM, EINKAUFSHILFE, BASISSTATION UND VERFAHREN ZUM SIGNALISIEREN VON ANGEBOTEN IN EINEM LADENGESCHÄFT**

(30) Priorität: 06.05.2015 DE 102015208362
(71) Anmelder: DocCheck AG, 50823 Köln (DE)
(72) Erfinder: ANTWERPES, Frank, 50668 Köln (DE); KÖLZER, Thilo, 50226 Frechen (DE)
(74) Vertreter: Dendorfer, Claus

(57) **Zusammenfassung**

Ein Einkaufssystem umfasst eine Mehrzahl von bewegbaren Einkaufshilfen (10) und eine Mehrzahl von Basisstationen (40). Jede Einkaufshilfe (10) weist einen Näherungsdetektor für Basisstationen (40) auf und ist dazu eingerichtet, einem Benutzer der Einkaufshilfe (10) eine Annäherung der Einkaufshilfe (10) an eine Basisstation (40) zu signalisieren. Ferner weist jede Basisstation (40) einen Näherungsdetektor für Einkaufshilfen (10) auf und ist dazu eingerichtet, einem Benutzer einer Einkaufshilfe (10), nicht jedoch der Einkaufshilfe (10), eine Annäherung dieser Einkaufshilfe (10) an die Basisstation (40) zu signalisieren. Die Erfindung umfasst ferner eine Einkaufshilfe (10), eine Basisstation (40), und ein Verfahren zum Signalisieren von Angeboten in einem Ladengeschäft.

## Beschreibung

Die Erfindung betrifft allgemein das Gebiet der Ausgestaltung und Organisation von Ladengeschäften. Spezieller betrifft die Erfindung ein Einkaufssystem, mit dem Benutzer auf bestimmte Angebote hingewiesen werden können.

Es sind bereits diverse Einkaufssysteme bekannt, bei denen Einkaufshilfen (z.B. Einkaufswägen) mit elektronischen Geräten ausgestattet werden, um Benutzern zusätzliche Informationen zukommen zu lassen. So zeigt beispielsweise die deutsche Offenlegungsschrift DE 100 20 544 A1 ein Einkaufssystem mit Einkaufswägen, von denen jeder eine Tastatur, einen Datenkartenleser, eine Ausgabeeinheit, eine Gewichtsmesseinrichtung und eine Sende-/Empfangseinrichtung zur Datenkommunikation mit einer externen Produktverwaltung aufweist. Das Einkaufsystem vermag diverse Funktionen auszuführen. So kann beispielsweise ein Kunde ein gewünschtes Produkt eingeben. Der Standort des Produkts und die aktuelle Position des Einkaufswagens werden ermittelt. Dem Kunden wird dann über die Ausgabeeinheit ein Weg zum Produkt mitgeteilt. Ein derartiges Einkaufssystem mag durchaus vorteilhaft sein; es ist aber teuer in der Anschaffung und erfordert laufende Datenpflege und -aktualisierung. Auch der Kunde benötigt erhebliche Einarbeitungszeit, um die diversen Funktionen des Einkaufssystems zu verstehen und vollständig nutzen zu können.

US 2001/0028301 A1 offenbart ein Einkaufssystem, bei dem Einkaufshilfen in Griffe von Einkaufswägen eingebaut oder an solche Griffe angebracht sind. Die Einkaufshilfen empfangen Daten von mehreren Basisstationen. Jede Basisstation weist einen Näherungsdetektor für Einkaufswägen auf. Wenn eine Basisstation die Annäherung eines Einkaufswagens erkennt, dann sendet die Basisstation ein Aktivierungssignal und ein Datensignal an die Einkaufshilfe. Die Einkaufshilfe signalisiert daraufhin die Aktivierung an den Kunden, z.B. durch Vibration, und zeigt ferner durch das Datensignal angegebene Informationen auf einer grafischen Anzeige an. Auch die Basisstation kann die Aufmerksamkeit des Kunden durch Lichtsignale auf sich ziehen. Dieses System ist aber ebenfalls relativ komplex und sieht erhebliche Investitionen vor.

Es besteht daher Bedarf nach einem Einkaufssystem, das besonders kostengünstig ist, dessen Installation und Betrieb wenig Aufwand verursachen und das auch von Kunden sofort verstanden und angenommen wird. Die Erfindung hat die Aufgabe, ein derartiges System, sowie dessen Komponenten und ein entsprechendes Verfahren, vorzuschlagen.

Die Erfindung ist durch die unabhängigen Ansprüche definiert. Die abhängigen Ansprüche betreffen optionale Merkmale einiger Ausführungsbeispiele der Erfindung.

Die vorliegende Erfindung geht von der Grundidee aus, ein Einkaufssystem mit Einkaufshilfen und Basisstationen bereitzustellen, bei dem eine Annäherung zwischen einer Einkaufshilfe und einer Basisstation erkannt und sowohl seitens der Einkaufshilfe als auch seitens der Basisstation an einen Benutzer signalisiert wird. Beispielsweise kann die Einkaufshilfe ein Einkaufskorb mit einem in einen Griff integrierten Vibrationsgeber sein, und die Basisstation kann ein an einem Regal in der Nähe eines Sonderangebots angebrachtes Modul mit einer optischen Signalleuchte sein. Wenn sich in diesem Beispiel der Benutzer mit dem Einkaufskorb der Basisstation nähert, wird der Benutzer sowohl durch den vibrierenden Griff des Einkaufskorbs als auch durch die aufleuchtende Signalleuchte der Basisstation auf das Sonderangebot aufmerksam gemacht. Der Benutzer kann daher das Sonderangebot sofort erkennen und im Regal identifizieren.

Die erfindungsgemäße Lösung erlaubt besonders kostengünstige und für alle Beteiligten leicht bedienbare Ausgestaltungen. Seitens des Ladenpersonals ist in bevorzugten Ausführungsformen keine Programmierung der Einkaufshilfen und/oder der Basisstationen erforderlich. Es reicht vielmehr aus, wenn das Ladenpersonal je eine Basisstation in der Nähe von besonders hervorzuhebenden Angeboten aufstellt oder anbringt. Auch eine Einstellung oder Konfiguration durch die Benutzer ist in bevorzugten Ausgestaltungen nicht erforderlich. In diesen besonders einfachen Ausführungsformen reagieren - zumindest innerhalb eines Ladengeschäfts - alle Einkaufshilfen und alle Basisstationen in gleicher Weise aufeinander.

Mit anderen Worten sind in solchen Ausführungsformen die Signalisierungsfunktionen der Einkaufshilfen nicht auf bestimmte Basisstationen oder bestimmte Waren individualisiert, und die Signalisierungsfunktionen der Basisstationen sind nicht auf bestimmte Einkaufshilfen individualisiert. Es sind jedoch auch Ausgestaltungen vorgesehen, bei denen bestimmte Typen von Einkaufshilfen (oder auf bestimmte Art konfigurierte Einkaufshilfen) nur auf bestimmte Gruppen von Basisstationen ansprechen und umgekehrt.

In bevorzugten Ausgestaltungen ist vorgesehen, dass dem Benutzer einer Einkaufshilfe die Annäherung dieser Einkaufshilfe an eine Basisstation mittels eines Vibrationssignals angezeigt wird. Bevorzugt ist dieses Vibrationssignal das ausschließliche für den Benutzer wahrnehmbare Signalisierungsmittel der Einkaufshilfe. In manchen Ausführungsformen kann die Einkaufshilfe frei von einer elektronischen Bildanzeigeeinrichtung sein. Solche Ausgestaltungen sind besonders einfach und kostengünstig. Unter einer "elektronischen Bildanzeigeeinrichtung" soll jede elektronische Anzeige verstanden werden, die elektronisch gespeicherte oder übermittelte Bilder darzustellen vermag. Dies können beispielsweise LCD- oder OLED-Anzeigen sein. Eine bloße elektrische Beleuchtung eines auf Papier oder Kunststoff aufgedruckten Bildes ist dagegen keine "elektronischen Bildanzeigeeinrichtung" im hier verwendeten Sinne.

Die Basisstation weist in manchen Ausführungsformen eine optische Anzeige - beispielsweise eine Leuchtanzeige mit einer oder mehreren Leuchtdioden oder anderen Lichtquellen - auf. Bevorzugt ist vorgesehen, dass diese optische Anzeige das ausschließliche für den Benutzer wahrnehmbare Mittel ist, mit dem die Basisstation eine Annäherung einer Einkaufshilfe signalisiert. Derartige Ausgestaltungen sind kostengünstig und wirksam.

In manchen Ausgestaltungen sendet die Basisstation Signale, aus denen die Einkaufshilfe eine Annäherung an die Basisstation zu erkennen vermag. Das Senden dieser Signale ist jedoch vorzugsweise unabhängig von einer Annäherung einer Einkaufshilfe. Mit anderen Worten werden die Signale von der Basisstation kontinuierlich oder intermittierend ausgesendet, aber unabhängig davon, ob sich gerade eine Einkaufshilfe nahe der Basisstation befindet oder nicht. Die Einkaufshilfe weist in manchen Ausgestaltungen entsprechende Merkmale auf; sie sendet also Signale, aus denen die Basisstation eine Annäherung der Einkaufshilfe zu erkennen vermag, unabhängig davon, ob sich gerade eine Einkaufshilfe in der Nähe der Basisstation befindet. Auch diese Signale können kontinuierlich oder intermittierend ausgesendet werden.

In manchen Ausführungsformen sendet die Basisstation ausschließlich solche für die Einkaufshilfe bestimmte Signale, die zwar der Einkaufshilfe eine Annäherungserkennung an die Basisstation erlauben, die aber keinen darüber hinausgehenden Informationsgehalt aufweisen. Insbesondere soll in diesen Signalen kein Hinweis auf bestimmte Waren oder bestimmte Angebote codiert sein. Dies schließt natürlich nicht aus, dass die Basisstation in manchen Ausgestaltungen für die Kunden bestimmte Signale (z.B. ein Lichtsignal) und/oder für andere technische Einheiten bestimmte Signale sendet. In weiteren Ausführungsformen sendet die Basisstation zwar Signale mit codierten Waren- und/oder Angebotsdaten; diese Signale werden aber von den Einkaufshilfen nicht inhaltlich, sondern nur zum Zweck der Annäherungserkennung ausgewertet. Diese Merkmale können mit dem im vorherigen Absatz genannten Merkmalen kombiniert werden, müssen dies aber nicht.

Entsprechend sendet in manchen Ausführungsformen die Einkaufshilfe ausschließlich solche für die Basisstation bestimmte Signale, die zwar der Basisstation eine Erkennung der Annäherung der Einkaufshilfe erlauben, die aber keinen darüber hinausgehenden Informationsgehalt aufweisen. Auch dies schließt nicht aus, dass die Einkaufshilfe in manchen Ausgestaltungen für die Kunden bestimmte Signale (z.B. ein Licht- oder Vibrationssignal) oder für andere technische Einheiten bestimmte Signale sendet. In weiteren Ausführungsformen sendet die Einkaufshilfe zwar Signale mit codierten Daten; diese Signale werden aber von den Basisstationen nicht inhaltlich, sondern nur zum Zweck der Annäherungserkennung ausgewertet. Diese Merkmale können mit den im vorherigen und/oder dem vor-vorherigen Absatz genannten Merkmalen kombiniert werden, müssen dies aber nicht.

Eine besonders kostengünstige Konstruktion ist in manchen Ausführungsformen dadurch möglich, dass sowohl die Einkaufshilfen als auch die Basisstationen jeweils ein kontinuierliches oder intermittierendes Signal, beispielsweise ein Funk- oder Infrarot- oder Ultraschallsignal, mit einem voreingestellten Sendepegel senden. Dieses Signal wird empfangen, und der Empfangspegel wird mit einem voreingestellten Schwellwert verglichen. Bei einer Überschreitung dieses Schwellwerts wird die Annäherung signalisiert.

Weitere Merkmale, Ziele und Vorteile der Erfindung ergeben sich aus der folgenden ausführlichen Beschreibung von Ausführungsbeispielen, in Verbindung mit den beigefügten schematischen Zeichnungen. Es zeigen:
Fig. 1 eine schematische Darstellung eines Einkaufssystems gemäß einem Ausführungsbeispiel der Erfindung,
Fig. 2 ein schematisches Blockdiagramm einer Einkaufshilfe als Teil des Einkaufssystems gemäß dem Ausführungsbeispiel von Fig. 1, und
Fig. 3 ein schematisches Blockdiagramm einer Basisstation als Teil des Einkaufssystems gemäß dem Ausführungsbeispiel von Fig. 1.

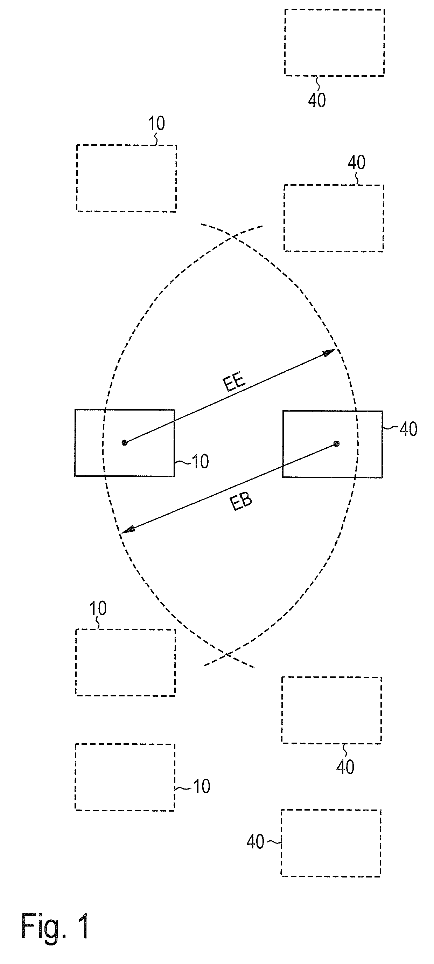

Bei dem in Fig. 1 gezeigten Ausführungsbeispiel eines Einkaufssystems befinden sich in einem Ladengeschäft, beispielsweise einem Supermarkt, mehrere bewegbare Einkaufshilfen 10 und mehrere Basisstationen 40. Jede Einkaufshilfe 10 kann beispielsweise als Einkaufswagen oder Einkaufskorb oder als Modul ausgebildet sein, das in einen Einkaufswagen oder -korb gelegt wird. Jede Basisstation 40 kann in Form eines kompakten Geräts oder Moduls ausgestaltet sein, das benachbart einer angebotenen Ware in einem Regal des Ladengeschäfts steht oder an einer Regalschiene angebracht ist.

Wie später noch genauer beschrieben werden wird, ist jede der Einkaufshilfen 10 dazu eingerichtet, zu erkennen, wenn sich die Einkaufshilfe 10 derart an eine Basisstation 40 annähert, dass die Basisstation 40 in einen Erkennungsbereich EE der Einkaufshilfe 10 gelangt. Wird eine solche Annäherung erkannt, so signalisiert die Einkaufshilfe 10 dies an einen Benutzer, indem beispielsweise eine an einem Griff der Einkaufshilfe 10 fühlbare Vibration ausgelöst wird. Ebenso ist jede Basisstation 40 dazu eingerichtet, zu erkennen, wenn sich eine der Einkaufshilfen 10 in einen Erkennungsbereich EB der Basisstation 40 bewegt. Die Basisstation 40 signalisiert eine solche Annäherung ebenfalls, und zwar auf eine Weise, die für den Benutzer der sich annähernden Einkaufshilfe 10 wahrnehmbar ist. Beispielsweise kann eine optische Signalleuchte der Basisstation 40 aufleuchten oder blinken.

In bevorzugten Ausgestaltungen ist der Erkennungsbereich EE der Einkaufshilfe 10 ungefähr so groß wie der Erkennungsbereich EB der Basisstation 40. Eine Annäherung wird dann von der Einkaufshilfe 10 und der Basisstation 40 ungefähr gleichzeitig erkannt, so dass der Benutzer durch die Vibration auf ein besonderes Angebot in der Nähe aufmerksam gemacht wird und durch das Aufleuchten der optischen Signalleuchte sofort erkennt, wo in den umgebenden Regalen sich das Angebot befindet. Beispielsweise können beide Erkennungsbereiche EE, EB je einen Radius von ungefähr 1,50 - 2,00 m aufweisen.

In manchen Ausgestaltungen ist die Näherungserkennung der Einkaufshilfe 10 und/oder der Basisstation 40 derart ausgestaltet, dass die Signalisierung nur eine vorbestimmte Zeit lang andauert, wenn sich der Benutzer in die jeweiligen Erkennungsbereiche EE, EB hineinbewegt. Befindet sich der Benutzer längere Zeit innerhalb eines Erkennungsbereichs, so endet die Signalisierung, um den Benutzer nicht zu stören und die Aufmerksamkeit des Benutzers nicht abstumpfen zu lassen.

Es sind Ausgestaltungen denkbar, bei denen unterschiedliche Gruppen von Einkaufshilfen 10 je einer Gruppe von Basisstationen 40 zugeordnet sind, so dass eine Erkennung und Signalisierung nur jeweils innerhalb einer Gruppe erfolgt. Auf diese Weise können Interessen der Benutzer berücksichtigt werden. So kann beispielsweise vorgesehen sein, dass Einkaufshilfen 10 einer bestimmten Farbe oder mit einer bestimmten Beschriftung der Gruppe "Interesse an Kosmetikprodukten" zugeordnet sind und nur zu einer Näherungserkennung mit bestimmten Basisstationen 40 führen. In bevorzugten Ausgestaltungen erfolgt jedoch der Einfachheit halber keine derartige Individualisierung, so dass - zumindest innerhalb eines bestimmten Ladengeschäfts - alle Einkaufshilfen 10 auf eine Annäherung an alle Basisstationen 40 ansprechen und umgekehrt.

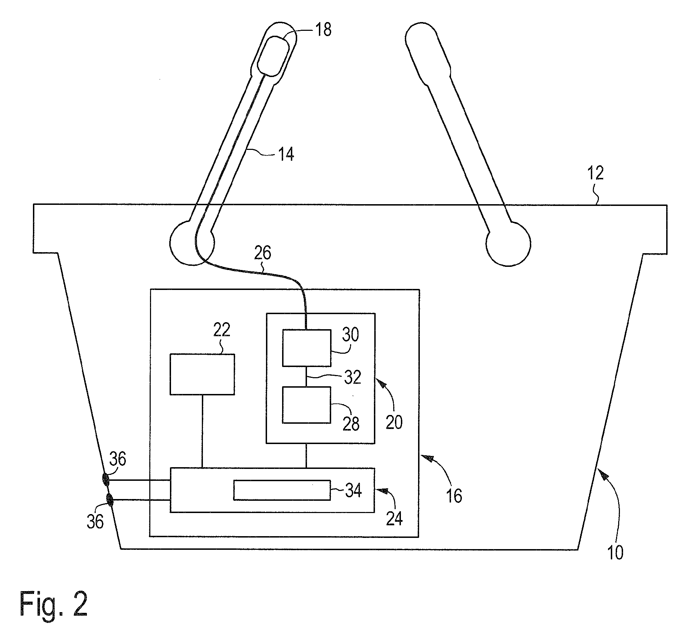

Fig. 2 zeigt einen beispielhaften Aufbau einer Einkaufshilfe 10, die im vorliegenden Ausführungsbeispiel als Einkaufskorb ausgestaltet ist. Die Einkaufshilfe 10 weist einen Behälter 12 für eingekaufte Waren mit einem Griff 14, ein Elektronikmodul 16 und einen Signalgeber 18 auf. Das Elektronikmodul 16 kann in unterschiedlicher Weise in die Einkaufshilfe 10 eingebaut sein, beispielsweise im Boden oder an einer Seitenwand des Behälters 12 oder im Griff 14. Das Elektronikmodul 16 kann auch in mehrere Baugruppen aufgeteilt sein.

Der Signalgeber 18 ist im vorliegend beschriebenen Ausführungsbeispiel als Vibrationsgeber mit einem oder mehreren Motoren ausgestaltet, der/die in den Griff 14 integriert ist/sind. Diese Ausgestaltung ist besonders vorteilhaft, weil ein Vibrationsgeber den Benutzer unmittelbar auf ein in der Nähe befindliches Angebot aufmerksam macht, ohne andere Benutzer zu stören. In anderen Ausführungsformen können jedoch auch - alternativ oder zusätzlich - andere Arten von Signalgebern, beispielsweise optische oder akustische Signalgeber, vorgesehen sein.

Das Elektronikmodul 16 umfasst einen Näherungsdetektor 20, eine Sendeeinrichtung 22 und eine aufladbare Stromversorgung 24. Der Näherungsdetektor 20 ist über eine Leitung 26 für ein Erkennungssignal mit dem Signalgeber 18 verbunden. Der Näherungsdetektor 20 weist eine Empfangseinrichtung 28 und eine Auslöseeinrichtung 30 auf, die über eine Leitung 32 für ein Empfangssignal miteinander gekoppelt sind.

Die Sendeeinrichtung 22 und die Empfangseinrichtung 28 sind zum Austausch von drahtlosen Signalen mit der Basisstation 40 vorgesehen. Allgemein können dies Funksignale oder optische Signale (beispielsweise Infrarot-Licht) oder akustische Signale (beispielsweise Ultraschall) sein. Bei Ausführungsformen, die Funksignale einsetzen, können an sich bekannte Technologien verwendet werden, wie beispielsweise Bluetooth, RFID, WiFi, NFC, und so weiter. Im vorliegenden Ausführungsbeispiel unterscheidet sich das von der Sendeeinrichtung 22 abgegebene Signal von dem Signal, das die Empfangseinrichtung 28 von der Basisstation 40 erwartet. Beispielsweise können unterschiedliche Frequenzen, unterschiedliche Modulationsverfahren, unterschiedliche mit den Signalen übertragene Kennungen und so weiter verwendet werden.

Es versteht sich, dass die Sendeeinrichtung 22 und die Empfangseinrichtung 28 die gemäß den jeweils verwendeten Technologien erforderlichen Wandler, Umsetzer, Antennen, und so weiter aufweisen. Diese Bauteile brauchen nicht notwendigerweise in das Elektronikmodul 16 integriert zu sein, sondern können sich auch an anderen Stellen der Einkaufshilfe 10 befinden.

Die aufladbare Stromversorgung 24 versorgt den Näherungsdetektor 20 - und über diesen den Signalgeber 18 - sowie die Sendeeinrichtung 22 mit elektrischer Energie. Dazu weist die Stromversorgung 24 einen Akkumulator 34 auf, der über externe Ladekontakte 36 geladen wird. Beispielsweise kann ein geeigneter Ständer oder Halter vorgesehen sein, der die Einkaufshilfen 10 auflädt, wenn sie in den Ständer/Halter gestellt oder geschoben werden. Im Ständer/Halter können die Einkaufshilfen 10 jede für sich mit spannungsführenden Kontakten des Ständers/Halters - beispielsweise in Form von Stromschienen - verbunden sein, oder es kann eine Kette von Einkaufshilfen 10 gebildet werden, von denen jede ihren Ladestrom von der jeweils vorhergehenden Einkaufshilfe 10 der Kette bezieht. Alternativ oder zusätzlich kann auch eine kontaktlose - beispielsweise induktive - Ladung vorgesehen sein.

Im Betrieb sendet die Sendeeinrichtung 22 kontinuierlich oder in Intervallen drahtlose Signale (beispielsweise Funksignale), die von in der Nähe befindlichen Basisstationen 40 empfangen werden und von diesen Basisstationen 40 ausgewertet werden, um eine Annäherung der Einkaufshilfe 10 in die jeweiligen Erkennungsbereiche EB dieser Basisstationen 40 hinein zu erkennen. Ebenso senden die Basisstationen 40 drahtlose Signale, die unter anderem von der Empfangseinrichtung 28 der vorliegend beschriebenen Einkaufshilfe 10 empfangen werden. Die Empfangseinrichtung 28 liefert über die Leitung 32 ein Empfangssignal, das den Pegel des stärksten empfangenen Signals angibt, an die Auslöseeinrichtung 30. Dieser Pegel entspricht zumindest näherungsweise dem Abstand der Einkaufshilfe 10 zur nächsten Basisstation 40.

Die Auslöseeinrichtung 30 bestimmt in Abhängigkeit von dem Empfangssignal, ob und wann eine Signalisierung an den Benutzer der Einkaufshilfe 10 ausgelöst werden soll. Hierzu vergleicht die Auslöseeinrichtung 30 im vorliegend beschriebenen Ausführungsbeispiel den Pegel des stärksten empfangenen Signals, wie er durch das Empfangssignal der Empfangseinrichtung 28 angegeben wird, mit einem fest vorgegebenen oder dynamisch veränderlichen Schwellwert. Wenn der Schwellwert bislang unterschritten war und nun überschritten wird, so nimmt die Auslöseeinrichtung an, dass sich die Einkaufshilfe 10 gerade an eine Basisstation 40 angenähert hat, und zwar so weit, dass der Abstand der Basisstation 40 nun innerhalb des Erkennungsbereichs EE der Einkaufshilfe 10 liegt. Die Auslöseeinrichtung 30 gibt dann für eine vorbestimmte Zeitdauer ein Erkennungssignal über die Leitung 26 an den Signalgeber 18, um den Signalgeber 18 während dieser Zeitdauer zu aktivieren. Die erkannte Annäherung der Einkaufshilfe 10 an die Basisstation 40 wird somit dem Benutzer der Einkaufshilfe signalisiert.

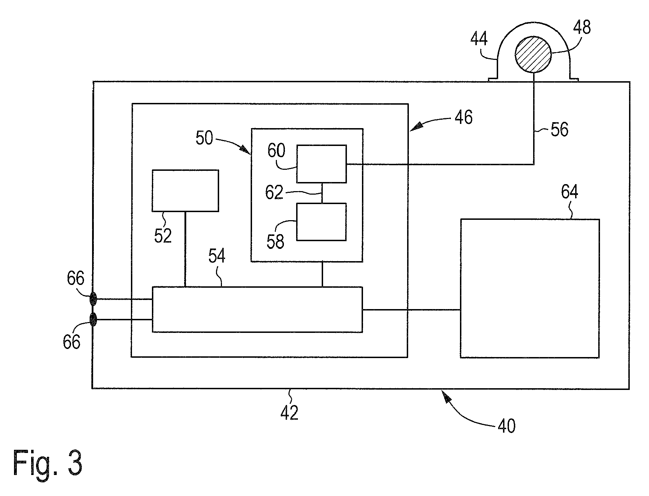

In Fig. 3 sind Komponenten der Basisstation 40 gezeigt, die weitgehend denen der Einkaufshilfe 10 entsprechen. Die Basisstation 40 weist ein Gehäuse 42 auf, das beispielsweise in ein Regal eines Ladengeschäfts gestellt oder an eine Regalschiene montiert werden kann. Die Basisstation 40 umfasst ein Elektronikmodul 46 und einen Signalgeber 48. Im vorliegenden Ausführungsbeispiel ist der Signalgeber 48 als optischer Signalgeber ausgestaltet, beispielsweise in Form einer Leuchtdiode, die in eine lichtdurchlässige Kuppel 44 auf dem Gehäuse 42 eingebaut und somit für Benutzer gut sichtbar ist. Alternativ oder zusätzlich kann der Signalgeber 48 auch akustische Signale abgeben, beispielsweise einen Signalton oder eine Sprachnachricht.

Ähnlich wie bei der Einkaufshilfe 10 weist das Elektronikmodul 46 der Basisstation 40 einen Näherungsdetektor 50, eine Sendeeinrichtung 52 und eine aufladbare Stromversorgung 54 auf. Der Näherungsdetektor 50 umfasst eine Empfangseinrichtung 58 und eine Auslöseeinrichtung 60. Die Auslöseeinrichtung 60 ist über eine Leitung 62 für ein Empfangssignal mit der Empfangseinrichtung 58 und über eine Leitung 56 für ein Erkennungssignal mit dem Signalgeber 48 verbunden.

Die Stromversorgung 54 ist mit einem Akkumulator 64 gekoppelt, der im hier beschriebenen Ausführungsbeispiel außerhalb des Elektronikmoduls 46 gezeigt ist, aber der auch in das Elektronikmodul 46 integriert sein kann. Externe Ladekontakte 66 dienen zum Aufladen des Akkumulators 64. In Ausführungsalternativen kann eine induktive Ladeeinrichtung vorgesehen sein, oder die Basisstation 40 kann mit einem Anschluss für eine externe Spannungsversorgung - beispielsweise ein externes Netzteil oder ein in das Regal integriertes Versorgungsnetz - ausgestattet sein.

Wie bereits beschrieben, sendet beim Betrieb der Basisstation 40 die Sendeeinrichtung 52 erste drahtlose Signale aus, die dazu vorgesehen sind, von einer Empfangseinrichtung 28 einer Einkaufshilfe 10 empfangen zu werden und dort eine Signalisierung durch den Signalgeber 18 auszulösen, sobald die Einkaufshilfe 10 sich der Basisstation 40 so weit annähert, dass die Basisstation 40 in den Erkennungsbereich EE der Einkaufshilfe 10 gelangt. Entsprechend empfängt die Empfangseinrichtung 58 zweite drahtlose Signale, die von einer Sendeeinrichtung 22 einer Einkaufshilfe 10 ausgesendet werden und die sich von den ersten drahtlosen Signalen unterscheiden. In manchen Ausführungsformen senden mehrere Einkaufshilfen 10 in einem Ladengeschäft die gleiche Art von ersten drahtlosen Signalen, so dass diese Signale für die Basisstationen 40 nicht unterscheidbar sind. Entsprechend senden in manchen Ausführungsbeispielen mehrere Basisstationen 40 in einem Ladengeschäft die gleiche Art von zweiten drahtlosen Signalen, die somit für die in diesem Ladengeschäft befindlichen Einkaufshilfen 10 nicht unterscheidbar sind.

Die Empfangseinrichtung 58 erzeugt ein Empfangssignal, das von der Auslöseeinrichtung 60 ausgewertet wird und zu einer Aktivierung der Signaleinrichtung 48 führt, sobald die Einkaufshilfe 10 in den Erkennungsbereich EB der Basisstation 40 gelangt. Im vorliegenden Ausführungsbeispiel unterscheiden sich diese Funktionen nicht von den entsprechenden Funktionen der Einkaufshilfe 10, so dass auf die obige Beschreibung von Ausführungsbeispielen und Ausführungsalternativen der Einkaufshilfe 10 verwiesen wird.

Die Einzelheiten, die in der obigen Beschreibung von Ausführungsbeispielen enthalten sind, sollen nicht als Einschränkung des Schutzbereichs der Erfindung verstanden werden, sondem als exemplarische Darstellung einiger ihrer Ausführungsformen. Viele Varianten sind möglich und dem Fachmann sofort ersichtlich. Insbesondere betrifft dies Variationen, die eine Kombination von Merkmalen der einzelnen hier beschriebenen Ausführungsbeispiele aufweisen. Daher soll der Bereich der Erfindung nicht durch die dargestellten Ausführungsbeispiele bestimmt sein, sondern durch die angehängten Ansprüche und ihre rechtlichen Äquivalente.

## Patentansprüche

1. Einkaufssystem, umfassend eine Mehrzahl von bewegbaren Einkaufshilfen (10) und eine Mehrzahl von Basisstationen (40), wobei:
jede Einkaufshilfe (10) einen Näherungsdetektor (20) für Basisstationen (40) aufweist und dazu eingerichtet ist, einem Benutzer der Einkaufshilfe (10) eine Annäherung der Einkaufshilfe (10) an eine Basisstation (40) zu signalisieren, und
jede Basisstation (40) einen Näherungsdetektor (50) für Einkaufshilfen (10) aufweist und dazu eingerichtet ist, einem Benutzer einer Einkaufshilfe (10) eine Annäherung dieser Einkaufshilfe (10) an die Basisstation (40) zu signalisieren.

2. Einkaufshilfe (10) mit einem Näherungsdetektor (20) und einem Signalgeber (18), wobei der Näherungsdetektor (20) dazu eingerichtet ist, eine Annäherung der Einkaufshilfe (10) an eine externe Basisstation (40) zu erkennen, und der Signalgeber (18) dazu eingerichtet ist, die Annäherung ansprechend auf ein Erkennungssignal des Näherungsdetektors (20) an einen Benutzer der Einkaufshilfe (10) zu signalisieren.

3. Einkaufshilfe (10) nach Anspruch 2, **dadurch gekennzeichnet, dass** die Einkaufshilfe (10) ferner eine Sendeeinrichtung (22) aufweist, die dazu eingerichtet ist, ein Sendesignal zum Empfang durch externe Basisstationen (40) auszusenden, und zwar unabhängig davon, ob gerade eine Annäherung der Einkaufshilfe (10) an eine externe Basisstation (40) erkannt wird.

4. Einkaufshilfe (10) nach Anspruch 2 oder Anspruch 3, **dadurch gekennzeichnet, dass** die Einkaufshilfe (10) ferner eine Empfangseinrichtung (28) zum Empfang von Signalen von externen Basisstationen (40) aufweist, und dass der Näherungsdetektor (20) dazu eingerichtet ist, das Erkennungssignal auszugeben, wenn ein Pegel des stärksten empfangenen Signals einen Schwellwert übersteigt.

5. Einkaufshilfe (10) nach einem der Ansprüche 2 bis 4, **dadurch gekennzeichnet, dass**
die Einkaufshilfe (10) frei von einer elektronischen Bildanzeigeeinrichtung ist, und/oder
die Signalisierungsfunktion der Einkaufshilfe (10) nicht auf bestimmte Basisstationen (40) oder bestimmte Waren individualisiert ist, und/oder
die Einkaufshilfe (10) ein Einkaufskorb oder ein Einkaufswagen ist.

6. Einkaufshilfe (10) nach einem der Ansprüche 2 bis 5, **dadurch gekennzeichnet, dass** der Signalgeber (18) ein Vibrationsgeber ist, um dem Benutzer der Einkaufshilfe (10) eine Annäherung der Einkaufshilfe (10) an eine externe Basisstation (40) zu signalisieren, wobei in manchen Ausgestaltungen der Vibrationsgeber das ausschließliche für den Benutzer wahrnehmbare Signalisierungsmittel der Einkaufshilfe (10) ist.

7. Einkaufshilfe (10) nach Anspruch 6, **dadurch gekennzeichnet, dass** die Einkaufshilfe (10) einen Behälter (12) für eingekaufte Waren und einen Griff (14) aufweist, und dass der Vibrationsgeber mit dem Griff (14) gekoppelt ist, so dass die Annäherung der Einkaufshilfe (10) an die externe Basisstation (40) für den Benutzer am Griff (14) der Einkaufshilfe (10) spürbar ist.

8. Basisstation (40) mit einem Näherungsdetektor (50) und einem Signalgeber (48), wobei der Näherungsdetektor (50) dazu eingerichtet ist, eine Annäherung einer externen Einkaufshilfe (10) an die Basisstation (40) zu erkennen, und der Signalgeber (48) dazu eingerichtet ist, die Annäherung ansprechend auf ein Erkennungssignal des Näherungsdetektors (50) an einen Benutzer der externen Einkaufshilfe (10) zu signalisieren, wobei von der Basisstation (40) vorzugsweise keine Signale gesendet werden, in die Hinweise auf bestimmte Waren oder bestimmte Angebote codiert sind.

9. Basisstation (40) nach Anspruch 8, **dadurch gekennzeichnet, dass** die Basisstation (40) ferner eine Sendeeinrichtung (52) aufweist, die dazu eingerichtet ist, ein Sendesignal zum Empfang durch die externe Einkaufshilfe (10) auszusenden, und zwar unabhängig davon, ob gerade eine Annäherung einer externen Einkaufshilfe (10) an die Basisstation (40) erkannt wird.

10. Basisstation (40) nach Anspruch 8 oder Anspruch 9, **dadurch gekennzeichnet, dass** die Basisstation (40) ferner eine Empfangseinrichtung (58) zum Empfang von Signalen von externen Einkaufshilfen (10) aufweist, und dass der Näherungsdetektor (50) dazu eingerichtet ist, das Erkennungssignal auszugeben, wenn ein Pegel des stärksten empfangenen Signals einen Schwellwert übersteigt.

11. Basisstation (40) nach einem der Ansprüche 8 bis 10, **dadurch gekennzeichnet, dass** der Signalgeber (48) eine optische Anzeige aufweist, um dem Benutzer der externen Einkaufshilfe (10) eine Annäherung der externen Einkaufshilfe (10) an die Basisstation (40) zu signalisieren, wobei in manchen Ausgestaltungen die optische Anzeige das ausschließliche für den Benutzer wahrnehmbare Signalisierungsmittel der Basisstation (40) ist.

12. Basisstation (40) nach einem der Ansprüche 8 bis 11, **dadurch gekennzeichnet, dass** die Signalisierungsfunktion der Basisstation (40) nicht auf bestimmte Einkaufshilfen (10) individualisiert ist.

13. Einkaufssystem, umfassend eine Mehrzahl von bewegbaren Einkaufshilfen (10) nach einem der Ansprüche 2 bis 7 und eine Mehrzahl von Basisstationen (40) nach einem der Ansprüche 8 bis 12.

14. Einkaufssystem nach Anspruch 14, **dadurch gekennzeichnet, dass** jede der Einkaufshilfen (10) die Annäherung an jede der Basisstationen (40) signalisiert, und dass jede der Basisstationen (40) die Annäherung jeder der Einkaufshilfen (10) signalisiert.

15. Verfahren zum Signalisieren von Angeboten in einem Ladengeschäft, wobei in dem Ladengeschäft eine Mehrzahl von bewegbaren Einkaufshilfen (10) und eine Mehrzahl von Basisstationen (40) bereitgestellt werden, und wobei:
jede Einkaufshilfe (10) einem Benutzer der Einkaufshilfe (10) signalisiert, wenn die Einkaufshilfe (40) derart zu einer Basisstation (40) hin bewegt wird, dass die Basisstation (40) in einen Erkennungsbereich (EE) der Einkaufshilfe (10) gelangt, und
jede Basisstation (40) einem Benutzer einer Einkaufshilfe (10), nicht jedoch der Einkaufshilfe (10), signalisiert, wenn die Einkaufshilfe (40) derart zu der Basisstation (40) hin bewegt wird, dass die Einkaufshilfe (10) in einen Erkennungsbereich (EB) der Basisstation (40) gelangt.
